# EUROPÄISCHE PATENTSCHRIFT

(11) **EP 0 836 101 B1**
(45) Veröffentlichungstag und Bekanntmachung des Hinweises auf die Patenterteilung: **13.02.2002**
(21) Anmeldenummer: 97117302.6
(22) Anmeldetag: 07.10.1997
(51) Int. Cl.: G01V 8/12

(54) **Überwachungsorgan mit Prüfstrahl im Zusammenhang mit Verpackungsmaschinen**
Optical control sensor for packaging machines
Capteur de contrôle optique pour machines d'emballage

(30) Priorität: 11.10.1996 DE 19641988
(43) Veröffentlichungstag der Anmeldung: 15.04.1998
(73) Patentinhaber: Focke & Co. (GmbH & Co.), 27283 Verden (DE)
(72) Erfinder: Focke, Heinz, 27283 Verden (DE)
(74) Vertreter: Bolte, Erich, Dipl.-Ing.

(56) Entgegenhaltungen:
- DE-U- 9 421 170
- US-A- 4 644 152
- US-A- 5 260 583

## Beschreibung

Die Erfindung betrifft ein optoelektronisches Überwachungsorgan mit emittiertem und empfangenem Prüfstrahl für Materialbahnen und/oder Zuschnitte aus Verpackungsmaterial im Zusammenhang mit Verpackungsmaschinen, mit folgenden Merkmalen:
a) das Überwachungsorgan weist ein Gehäuse mit zwei einander gegenüberliegenden Teilgehäusen auf,
b) mindestens ein Sender ist in dem einen Teilgehäuse angeordnet und mindestens ein Empfänger im anderen Teilgehäuse,
c) jedes Teilgehäuse weist im Bereich einer Wandung einen für den Prüfstrahl lichtdurchlässigen Bereich auf, wobei die Wandungen einander gegenüber liegen,
d) über eine Luftleitung wird Luft bzw. Gas unter Druck in das Gehäuse eingeleitet,
e) das Gehäuse ist mit Luftlöchern versehen, durch die die Luft aus dem Gehäuse herausströmt, und zwar gezielt in einen Bereich zwischen den einander gegenüberliegenden Wandungen, derart, dass vorzugsweise ständig ein in Richtung vom Sender und/oder Empfänger wegführender Luftstrom bzw. Gasstrom vorhanden ist.

In der Verpackungstechnik sind in vielen Bereichen Überwachungsorgane mit einem Prüfstrahl, insbesondere einer Lichtschranke, erforderlich. Diese Überwachungsorgane haben zum Einen die Aufgabe, die Arbeitsabläufe der Verpackungs-Maschine zu steuern, beispielsweise über Druckmarken an Materialbahnen oder Zuschnitten. Zum Anderen ist aber auch die positionsgenaue Anordnung und/oder Ausgestaltung von Materialbahnen und Zuschnitten zu überwachen.

Die Arbeitsweise der Maschine ist von der korrekten Funktionsweise der Überwachungsorgane abhängig. Diese wiederum sind empfindlich gegenüber Verschmutzungen, insbesondere gegenüber den bei Verpackungsmaschinen unvermeidbaren Staub- und Partikelablagerungen.

Aus der US 5,260,583 ist ein Überwachungsorgan bekannt, das mit einem Prüfstrahl einen freien Rand einer fortlaufenden Papierbahn im Hinblick auf Beschädigungen abtastet. Sender und Empfänger sind einander schräg gegenüberliegend angeordnet. Mit geringerem Versatz gegenüberliegend angeordnet sind Luftlöcher, aus denen Luft austritt und den freien Rand der Papierbahn beaufschlagt. Sofern ein Riss vorhanden ist, werden die den Riss begrenzenden Bereiche durch die einander gegenüberliegenden Luftströme auseinanderbewegt, sodass der Prüfstrahl passieren kann. Nachteilig ist hier zumindest, dass die Luft innerhalb des Prüforgans Sender und Empfänger passiert und durch Verwirbelungen Verschmutzungen ablagem kann. In der selben Schrift ist in einer weiteren Ausführungsform ein nur einseitig wirkendes Überwachungsorgan gezeigt (Reflektorprinzip). Eine von einer Linse abgedeckte Aus- und Eintrittsöffnung für den Prüfstrahl wird außerhalb des Gehäuses durch eine quergerichtete Luftströmung gereinigt.

In der DE-U-94 21 170 ist eine optoelektronische Abtasteinrichtung zur Erfassung der Position der Randperforation eines Aufzeichnungsträgers vorgesehen. Ein Gehäuse mit einem in etwa U-förmigen Bereich weist einander gegenüberliegende Sender und Empfänger auf, wobei eine Austrittsöffnung für den Senderstrahl durch eine quergerichtete Luftströmung sauber gehalten wird. Die Quelle für die Luftströmung ist an dem Schenkel des U-förmigen Gehäuses angeordnet, der auch den Lichtauslass trägt.

Schließlich ist aus der US 4,644,152 ein optoelektronisches Überwachungsorgan zum Abtasten von Zigaretten bekannt, bei dem Reinigungsluft an Sendern und Empfängern vorbeigeführt wird. Gleichwohl kann sich Schmutz auf Letzteren durch Verwirbelungen ablagern.

Erfindungsgemäß wird eine dauerhafte Funktionsfähigkeit der Überwachungsorgane durch folgende Merkmale gewährleistet:

Die lichtdurchlässigen Bereiche der Wandungen bestehen aus einem lichtdurchlässigen Werkstoff.

Die Luftlöcher und damit der Luftstrom bzw. Gasstrom sind schräg auf die jeweils gegenüberliegende Wandung gerichtet, sodass die Wandungen frei von Verunreinigungen, Staub, etc. gehalten sind. Somit werden auch die Einzelorgane freigehalten von Staubund sonstigen Ablagerungen. Der erzeugte Gas- bzw. Luftstrom bewirkt eine von den Einzelorganen wegführende Strömung, sodass ein Ablagem von Staub und anderen Partikeln nicht möglich ist. Teile des Überwachungsorgans insbesondere Sender und/oder Empfänger sind in einem Gehäuse bzw. in Teilgehäusen angeordnet, die für den Austritt des Prüfstrahls eine Öffnung bzw. eine für den Prüfstrahl durchlässige Wandung bzw. ein Fenster aufweisen. Bei dem derart ausgebildeten Überwachungsorgan wird erfindungsgemäß der Gas- bzw. Luftstrom so gerichtet, dass die für den Prüfstrahl durchlässige Wandung bzw. das Fenster des Gehäuses von Ablagerungen freigehalten werden. Dabei kann insbesondere Luft unter Überdruck in das Gehäuse eingeleitet und durch zielgerichtet positionierte Austrittsbohrungen aus dem Gehäuse im Bereich der durchlässigen Wandungen austreten.

Eine weitere Besonderheit der Erfindung besteht in der Handhabung eines lichtleitenden Organs, insbesondere eines Lichtleitkabels. Dieses ist erfindungsgemäß in einem Rohr, Schlauch oder Gehäuse angeordnet, welches gegenüber dem Lichtleitkabel einen ringförmigen Zwischenraum gewährleistet. Durch diesen wird ein Gas- bzw. Luftstrom in Richtung zur Endfläche des Lichtleitkabels hindurchgeleitet. Am Ende ist das Lichtleitkabel mit einem Kopf und gegebenenfalls einer Winkeloptik ausgerüstet. Mit diesem Kopf ist das Ende des Lichtleitkabels in einem Gehäuse abgestützt. Die Luftströmung tritt über die freie Seite aus dem Rohr bzw. Schlauch oder aus dem Gehäuse aus, also in Richtung von dem Ende des Lichtleitkabels weg.

Weitere Einzelheiten der Erfindung betreffen die Ausgestaltung von Überwachungsorganen oder Teilen derselben, insbesondere für die Anwendung in der Verpackungstechnik.

Ausführungsbeispiele von insbesondere optoelektronischen Überwachungsorganen werden nachfolgend anhand der Zeichnungen näher erläutert. Es zeigt:
- Fig. 1: ein Überwachungsorgan im Quer- bzw. Vertikalschnitt in der Schnittebene I-I der Fig. 2,
- Fig. 2: das Überwachungsorgan gemäß Fig. 1 in Seiten- bzw. Stirnansicht,
- Fig. 3: eine Verstärkereinheit in Ansicht,
- Fig. 4: ein Endbereich eines Lichtleitsystems in Seitenansicht,
- Fig. 5: die Einzelheit gemäß Fig. 4 in einem Horizontalschnitt.

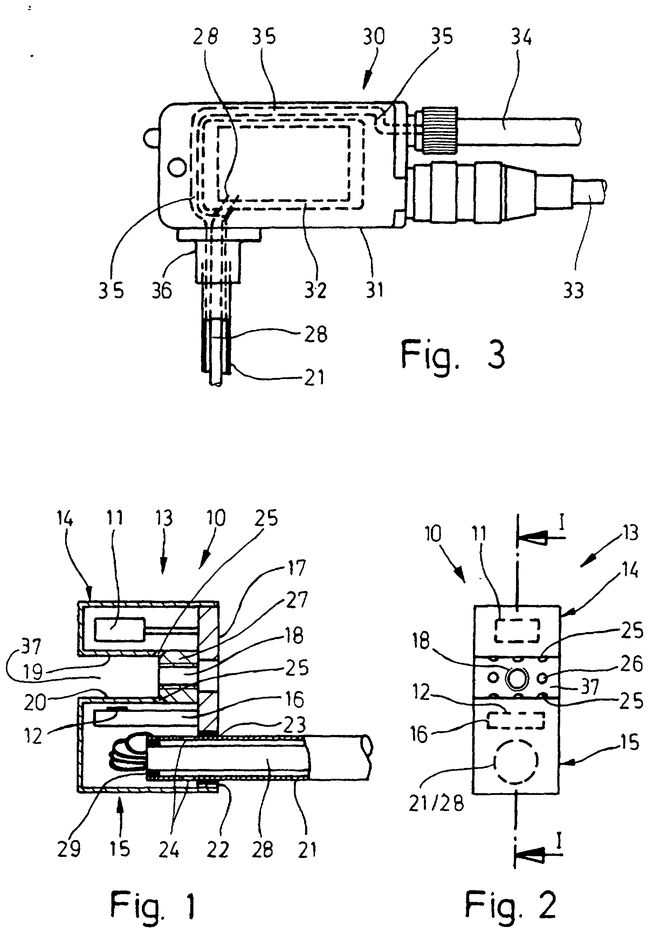

In Fig. 1 bis Fig. 3 ist als Ausführungsbeispiel für ein optoelektronisches Überwachungsorgan 10 eine sogenannte Gabellichtschranke gezeigt. Diese wird vorwiegend in der Verpackungstechnik eingesetzt, beispielsweise zur Positionskontrolle und -steuerung von Materialbahnen aus Verpackungsmaterial etc.

Das Überwachungsorgan 10 ist mit einem Sender 11 und einem Empfänger 12 ausgestattet. Als Sender 11 dient vorzugsweise eine Leuchtdiode. Als Empfänger 12 dient eine Fotozelle. Vom Sender 11 wird ein Lichtstrahl auf den Empfänger 12 gerichtet. Zwischen Sender 11 und Empfänger 12 wird der zu überwachende Gegenstand hindurchgeführt, beispielsweise die Materialbahn.

Sender 11 und Empfänger 12 sind in einem Gehäuse 13 untergebracht. Das Gehäuse hat insgesamt eine U-förmige Gestalt. In einem Schenkel des Gehäuses 13, nämlich in einem Teilgehäuse 14, befindet sich der Sender 11. In einem anderen, mit Abstand angeordneten Teilgehäuse 15 ist der Empfänger 12 untergebracht. Dieser sitzt auf einer Platine 16 mit elektrischen Bauteilen. Die Teilgehäuse 14, 15 sind an einer Tragplatte 17 angebracht. Diese dient auch zur Befestigung des Senders 11 und des Empfängers 12, letzterer über die Platine 16. Eine zwischen den Teilgehäusen 14, 15 angebrachte Bohrung 18 dient zur Befestigung des Überwachungsorgans an einem Träger der (Verpackungs-)Maschine.

Die Teilgehäuse 14, 15 bestehen aus lichtdurchlässigem bzw. durchsichtigem Material, insbesondere Kunststoff. Alternativ kann das Gehäuse 13 so ausgebildet sein, daß wenigstens einander zugekehrte Wandungen 19, 20 des Gehäuses 13 aus lichtdurchlässigem Material bestehen, um einen Lichtstrahl von dem Sender 11 zum Empfänger 12 durchzulassen.

Um eine Verschmutzung durch Staub, Materialpartikel etc. des Überwachungsorgans 10 zu vermeiden, wird ein Gasstrom, insbesondere ein Luftstrom ständig oder taktweise an gezielte Bereiche des Überwachungsorgans 10 gerichtet. Der Luftstrom wird so geführt, daß der Bereich zwischen Sender 11 und Empfänger 12 freigehalten, etwaige Partikel etc. weggeblasen werden. Der Luftstrom ist demnach so gerichtet, daß eine Luftströmung in Richtung von den optoelektronischen Organen weg gerichtet ist. Im vorliegenden Falle wird der Bereich zwischen den Teilgehäusen 14, 15, also ein Kontrollraum 37, freigehalten. Der Luftstrom ist so gerichtet, daß eine Strömung zu den freien Seiten dieses Kontrollraums 37 gerichtet ist.

Der Luftstrom bzw. die Freihaltungsluft wird bei dem gezeigten Ausführungsbeispiel über eine Luftleitung 21, die als Schlauch ausgebildet sein kann, in das Gehäuse 13 geleitet. Die Luftleitung 21 tritt über eine mit Abdichtung 22 versehene Öffnung 23 über die Tragplatte 17 in das Teilgehäuse 15 ein. Über seitliche, radial gerichtete Austrittsbohrungen 24 gelangt die Reinigungsluft in das Teilgehäuse 15. Dieses ist in seitlichen Bereichen (nicht gezeigt) mit dem Teilgehäuse 14 verbunden, so daß vom Teilgehäuse 15 Reinigungsluft, also Luft unter Druck, auch in das Teilgehäuse 14 gelangt.

Das Gehäuse 13 bzw. die Teilgehäuse 14, 15 sind mit Luftlöchern 25, 26 versehen, durch die die Reinigungsluft aus dem Gehäuse 13 bzw. den Teilgehäusen 14 und 15 herausströmt, und zwar gezielt in den Bereich zwischen den einander gegenüberliegenden Wandungen 19, 20, also in den Kontrollraum, und aus diesem wieder heraus. Diese unter Druck stehende Luft bewirkt eine Freihaltung der Oberflächen der Wandungen 19, 20. Die Luftlöcher 25, 26 wirken aufgrund ihrer Größe wie Luftdüsen.

Die Luftlöcher 25, 26 sind dem Reinigungszweck entsprechend positioniert. Eine Anzahl von Luftlöchern 25, nämlich je drei, befindet sich im Bereich einer Kehle der Wandung 19 oder 20 einerseits und einer quergerichteten Verbindungswand 27 zwischen den Wandungen 19 und 20. Diese Luftlöcher 25 sind schräggerichtet und damit auf die jeweils gegenüberliegende Wandung 19, 20. Weitere Luftlöcher 26 befinden sich im Bereich der Verbindungswand 27, und zwar zu beiden Seiten der Bohrung 18. Dadurch wird eine ständige Luftströmung aus dem Innenraum des Überwachungsorgans, also aus dem Kontrollraum 37 heraus, bewirkt.

Zu dem Überwachungsorgan 10 führen elektrische Leitungen. Diese sind bei dem gezeigten Ausführungsbeispiel in einem Kabel 28 zusammengefaßt. Luftleitung 21 und Kabel 28 bilden eine Einheit. Im vorliegenden Falle ist das Kabel 28 innerhalb der Luftleitung 21 angeordnet. Die Luftleitung 21 ist so bemessen, daß ein freier, ringförmiger Querschnitt für die Luftführung gegenüber dem Kabel 28 verbleibt. Das Kabel 28 tritt am freien Ende aus der Luftleitung 21 aus, und zwar in dem Gehäuse 13 bzw. Teilgehäuse 15. Das Kabel 28 ist in diesem Endbereich mit einer Abdichtung 29 gegenüber der Luftleitung 21 abgedichtet.

Eine weitere Besonderheit besteht darin, daß dem Überwachungsorgan 10 ein Verstärker 30 zugeordnet ist. Diese Einheit ist mit Abstand von dem Überwachungsorgan an der Maschine positioniert. Der Abstand kann beispielsweise 50cm betragen.

Der Verstärker 30 besteht aus einem Verstärkergehäuse 31. Innerhalb desselben ist eine elektrische Steuereinheit 32 angeordnet. Zu dieser führt das Kabel 28 vom Überwachungsorgan 10.

Die Steuereinheit 32 ist im vorliegenden Falle in die Versorgung des Überwachungsorgans 10 mit (Reinigungs-)Luft einbezogen. Zu der Steuereinheit 32 führt eine Elektroleitung 33 und eine separate Luftleitung 34. Diese ist an eine Druckluftquelle (nicht gezeigt) angeschlossen, die das System mit (ölfreier) Druckluft versorgt.

Innerhalb des Verstärkers 30 ist ein Luftkanal 35 gebildet, der außerhalb des Bereichs der Steuereinheit 32 von der Mündung der Luftleitung 34 zu einem gemeinsamen Anschluß 36 führt. Dieser ist an einer gegenüber der Eintrittsseite von Luftleitung 34 und Elektroleitung 33 quergerichteten Seitenwand gebildet. In den als Stutzen ausgebildeten Anschluß 36 führt der Luftkanal 35. An dessen Ende schließt die Luftleitung 21 an. Das Kabel 28 führt von der Steuereinheit 32 kommend in den Anschluß 36 und damit in das Ende der Luftleitung 21. Diese ist in dem Anschluß 36 verankert. Der Luftkanal 35 ist innerhalb des Verstärkergehäuses 31 in einer Einbettmasse aus Kunststoff oder dergleichen gebildet.

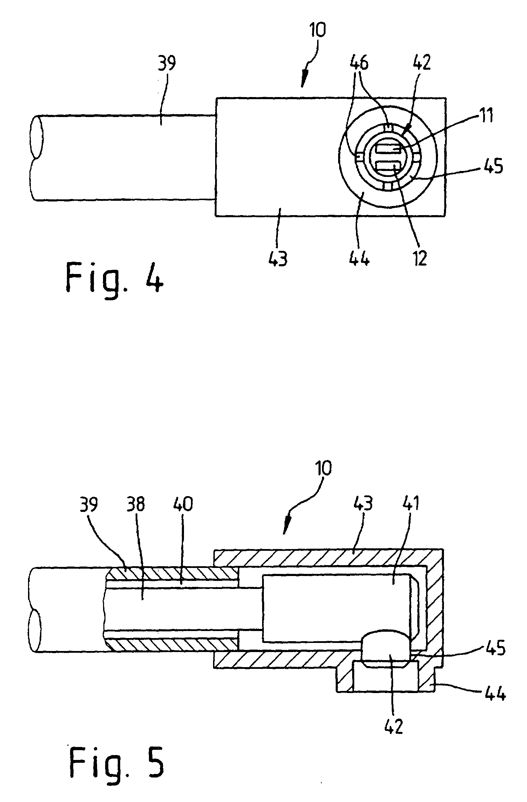

Ein anderes wichtiges Anwendungsbeispiel ist in Fig. 4 und Fig. 5 gezeigt. Eine Lichtleitung 38, beispielsweise aus Glasfasern, ist in einem Außenrohr 39 geführt. Dabei kann es sich alternativ auch um einen Schlauch handeln. Der Innendurchmesser dieses Außenrohrs 39 ist deutlich größer als die Außenabmessung der Lichtleitung 38. Es entsteht dadurch ein Ringkanal 40, in dem eine Gas- bzw. Luftströmung erzeugt wird, und zwar zum (freien) Ende der Lichtleitung 38 gerichtet.

Bei dem gezeigten Ausführungsbeispiel endet die Lichtleitung in einem vorzugsweise aus Metall bestehenden Kopf 41. Dieser bildet einen optischen Ausgang für die Lichtleitung 38, beim vorliegenden Ausführungsbeispiel eine seitlich angebrachte Winkeloptik 42. Diese ist nach außen offen, so daß Licht aus dem Kopf 41 austreten kann.

Der Kopf 41 ist in einem (zylindrischen) Gehäuse 43 angeordnet. Dieses ist mit dem freien Ende des Außenrohrs 39 verbunden und hat entsprechend der Abmessung des Kopfes 41 größere Innenabmessungen, so daß ein Raum für den Durchtritt des Gas- bzw. Luftstroms gebildet ist. Seitlich ist am Gehäuse ein nach außen offener Austrittsstutzen 44 angebracht.

Die Lichtleitung 38 bzw. der Kopf 41 ist im Bereich einer Austrittsöffnung des Gehäuses 43 gelagert. Im vorliegenden Falle sitzt die Winkeloptik 42 in einer dem Austrittsstutzen 44 zugekehrten seitlichen Öffnung 45. Wie aus Fig. 4 ersichtlich, ist die Winkeloptik 42 über Stützrippen 46 mittig in dem Austrittsstutzen 44 bzw. in der Öffnung 45 gelagert. Die vom Ende der Lichtleitung 38 wegführende Strömung tritt durch die Öffnung 45 hindurch, nämlich durch freie Segmente im Bereich zwischen Winkeloptik 42, Austrittsstutzen 44 und den Stützrippen 46.

Wie aus Fig. 4 ersichtlich, ist im vorliegenden Falle die Lichtleitung 38 so aufgebaut, daß sie Sender 11 und Empfänger 12 nebeneinanderliegend aufweist.

## Patentansprüche

1. Optoelektronisches Überwachungsorgan (10) mit emittiertem und empfangenem Prüfstrahl für Materialbahnen und/oder Zuschitte aus Verpackungsmaterial im Zusammenhang mit Verpackungsmaschinen, mit folgenden Merkmalen:
a) das Überwachungsorgan (10) weist ein mit zwei einander gegenüberliegenden Teilgehäusen (14, 15) Gehäuse (13) auf,
b) mindestens ein Sender (11) ist in dem einen Teilgehäuse (14) angeordnet und mindestens ein Empfänger (12) im anderen Teilgehäuse (15),
c) jedes Teilgehäuse (14, 15) weist im Bereich einer Wandung (19, 20) einen für den Prüfstrahl lichtdurchlässigen Bereich auf, wobei die Wandungen (19, 20) einander gegenüber liegen,
d) über eine Luftleitung (21) ist Luft bzw. Gas unter Druck in das Gehäuse (13) einleithar,
e) das Gehäuse (13) ist mit Luftlöchern (25) versehen, durch die, im Gebrauch, die Luft bzw. Gas aus dem Gehäuse (13) herausströmt, und zwar gezielt in einen Bereich zwischen den einander gegenüberliegenden Wandungen (19, 20), derart, dass vorzugsweise ständig ein in Richtung vom Sender (11) und/oder Empfänger (12) wegführender Luftstrom bzw. Gasstrom erzeugbar ist,
**gekennzeichnet durch** folgende Merkmale:
f) die lichtdurchlässigen Bereiche der Wandungen (19, 20) bestehen aus einem lichtdurchlässigem Werkstoff,
g) die Luftlöcher (25) und damit der im Gebrauch erzeugbare Luftstrom bzw. Gasstrom sind schräg auf die jeweils gegenüberliegende Wandung (19, 20) gerichtet, sodass die Wandungen (19, 20) frei von Verunreinigungen und Staub gehalten sind.

2. Überwachungsorgan nach Anspruch 1, **dadurch gekennzeichnet, dass** das Gehäuse (13) U-förmig ausgebildet ist, wobei die Teilgehäuse (14, 15) Schenkel des Gehäuses (13) sind, und dass die Luftströme bzw. Gasströme durch die Anordnung der Luftlöcher (25) in einen Zwischenraum, nämlich Kontrollraum (37), zwischen den Teilgehäusen (14, 15) einleitbar sind, sodass eine Lufströmung zu den freien Seiten des Kontrollraums (37) gerichtet ist.

3. Überwachungsorgan nach Anspruch 1 oder 2, **dadurch gekennzeichnet, dass** Luftlöcher (25) im Bereich eines Winkels zwischen den einander gegenüberliegenden Wandungen (19, 20) einerseits und einer quergerichteten Verbindungswand (27) angeordnet sind, derart, dass die Luftlöcher (25) schräg auf die jeweils gegenüberliegende Wandung (19, 20) gerichtet sind.

4. Überwachungsorgan nach Anspruch 1 oder einem der weiteren Ansprüche, **dadurch gekennzeichnet, dass** die Luft unter Druck durch eine gemeinsame Luftleitung (21) dem Überwachungsorgan (10) zuführbar ist, wobei ein ebenfalls zum Überwachungsorgan (10) führendes Kabel (28) mit der Luftleitung (21) eine Einheit bildet, insbesondere innerhalb der Luftleitung (21) angeordnet ist, derart, dass diese einen Luftkanal mit ringförmigem Querschnitt bildet.

5. Überwachungsorgan nach Anspruch 4, **dadurch gekennzeichnet, dass** das Kabel (28) innerhalb der Luftleitung (21) am freien Ende derselben durch Abdichtungen (29) abgedichtet ist und dass die Luftleitung (21) innerhalb des Gehäuses (13, 15) seitwärts gerichtete Austrittsbohrungen (27) für die Luft aufweist.

6. Überwachungsorgan nach Anspruch 1 oder einem der weiteren Ansprüche, **dadurch gekennzeichnet, dass** dem Überwachungsorgan (10) ein von diesem entfernt positionierter Verstärker (30) zugeordnet ist, wobei die Luftleitung (21) mit dem Verstärker (30) bzw. einem Verstärkergehäuse (31) verbunden und über eine an das Verstärkergehäuse (31) anschließende Luftleitung (34) mit einer Druckluftquelle verbunden ist.

7. Überwachungsorgan nach Anspruch 6, **dadurch gekennzeichnet, dass** innerhalb des Verstärkergehäuses (31) ein Luftkanal (35) von der Luftleitung (34) zur Luftleitung (21) gebildet ist.

8. Überwachungsorgan nach Anspruch 6 oder 7, **dadurch gekennzeichnet, dass** über einen Anschluß (36) die Luftleitung (21) und das innerhalb derselben verlaufende Kabel (28) an den Verstärker (30) anschließen.

9. Überwachungsorgan nach Anspruch 1 oder einem der weiteren Ansprüche, **dadurch gekennzeichnet, dass** eine Lichtleitung (38), insbesondere ein Glasfaserkabel, in einem Außenrohr (39) angeordnet ist, derart, dass zwischen Lichtleitung (38) und Außenrohr (39) ein Ringkanal (40) entsteht und dass ein Gas- bzw. Luftstrom zwischen Lichtleitung (38) und Außenrohr (39) hindurchleitbar ist in Richtung zu einem freien Ende der Lichtleitung (38).

10. Überwachungsorgan nach Anspruch 9, **dadurch gekennzeichnet, dass** am Ende der Lichtleitung (38) ein Kopf (41) angeordnet ist mit einer Öffnung, insbesondere mit einer seitwärtsgerichteten Winkeloptik (42), und dass der Kopf (41) in einem Gehäuse (43) positioniert ist mit einer Öffnung (45) für den Ein- und Austritt eines Lichtstrahls, wobei die Lichtleitung (38) bzw. die Winkeloptik (42) in der Öffnung (45) abgestützt ist, derart, dass nach außen aus dem Gehäuse (43) führende Öffnungen für den Luftstrom gebildet sind.

## Claims

1. Optoelectronic monitoring element (10) with an emitted and received test beam for material webs and/or blanks of packaging material in connection with packaging machines, having the following features:
a) the monitoring element (10) has a housing (13) with two mutually opposite part housings (14, 15),
b) at least one transmitter (11) is arranged in one part housing (14), and at least one receiver (12) in the other part housing (15),
c) each part housing (14, 15) has, in the region of a wall (19, 20), an area which lets the light of the test beam through, the walls (19, 20) lying opposite each other,
d) air or gas can be introduced under pressure into the housing (13) via an air line (21),
e) the housing (13) is provided with air holes (25), through which, during use, the air or gas flows out of the housing (13), to be specific deliberately into an area between the mutually opposite walls (19, 20), in such a way that an air stream or gas stream leading in the direction away from the transmitter (11) and/or receiver (12) can be produced, preferably continuously,
**characterized by** the following features:
f) the areas of the walls (19, 20) which let light through consist of a translucent material,
g) the air holes (25) and therefore the air stream or gas stream which can be produced during use are aimed obliquely at the respective opposite wall (19, 20), so that the walls (19, 20) are kept free of contaminants and dust.

2. Monitoring element according to Claim 1, **characterized in that** the housing (13) is U-shaped, the part housings (14, 15) being limbs of the housing (13), and **in that**, as a result of the arrangement of the air holes (25), the air streams or gas streams can be introduced into an interspace, namely a monitoring space (37), between the part housings (14, 15), so that an air stream is aimed at the free sides of the monitoring space (37).

3. Monitoring element according to Claim 1 or 2, **characterized in that** air holes (25) are arranged in the area of an angle between the mutually opposite walls (19, 20), on the one hand, and a transversely oriented connecting wall (27), in such a way that the air holes (25) are aimed obliquely at the respective opposite wall (19, 20).

4. Monitoring element according to Claim 1 or one of the further claims, **characterized in that** the air can be supplied under pressure to the monitoring element (10) through a common air line (21), a cable (28) likewise leading to the monitoring element (10), together with the air line (21), forming a unit, in particular being arranged within the air line (21), in such a way that the latter forms an air duct with an annular cross section.

5. Monitoring element according to Claim 4, **characterized in that** the cable (28) within the air line (21) is sealed off at the free end of the same by seals (29), and **in that** inside the housing (13, 15), the air line (21) has laterally oriented outlet holes (27) for the air.

6. Monitoring element according to Claim 1 or one of the further claims, **characterized in that** the monitoring element (10) is assigned an amplifier (30) that is positioned remotely from the latter, the air line (21) being connected to the amplifier (30) or an amplifier housing (31) and being connected to a compressed-air source via an air line (34) connected to the amplifier housing (31).

7. Monitoring element according to Claim 6, **characterized in that** an air duct (35) from the air line (34) to the air line (21) is formed within the amplifier housing (31).

8. Monitoring element according to Claim 6 or 7, **characterized in that** the air line (21) and the cable (28) running inside the latter connect to the amplifier (30) via a connection (36).

9. Monitoring element according to Claim 1 or one of the further claims, **characterized in that** an optical line (38), in particular a glass fibre cable, is arranged in an outer tube (39), **in that** an annular duct (40) is produced between optical line (38) and outer tube (39), and **in that** a gas or air stream can be led through between optical line (38) and outer tube (39) in the direction of a free end of the optical line (38).

10. Monitoring element according to Claim 9, **characterized in that** at the end of the optical line (38) a head (41) is arranged, having an opening, in particular with a laterally oriented angle optical system (42), and **in that** the head (41) is positioned in a housing (43) with an opening (45) for the inlet and outlet of a light beam, the optical line (38) or the angle optical system (42) being supported in the opening (45) in such a way that openings leading to the outside from the housing (43) are formed for the air stream.

## Revendications

1. Organe optoélectronique de contrôle (10) avec faisceau de contrôle émis et reçu pour des bandes de matériau et/ou des découpes en matériau d'emballage en relation avec des machines d'emballage, ayant les caractéristiques suivantes :
a) l'organe de contrôle (10) présente un boîtier (13) comportant deux boîtiers partiels opposés (14, 15),
b) au moins un émetteur (11) est monté dans un boîtier partiel (14) et au moins un récepteur (12) monté dans l'autre boîtier partiel (15),
c) chaque boîtier partiel (14, 15) présente dans la zone d'une paroi (19, 20) une zone transparente pour le faisceau de contrôle, les parois (19, 20) se faisant face,
d) de l'air ou un gaz sous pression peut être envoyé dans le boîtier (13) par une conduite d'air (21),
e) le boîtier (13) est pourvu de trous à air (25) par lesquels, en service, l'air ou le gaz sort du boîtier (13), et ce de manière dirigée dans une zone entre les parois se faisant face (19, 20), de façon telle que de préférence constamment puisse être produit un courant d'air ou de gaz partant de l'émetteur (11) et/ou du récepteur (12),
**caractérisé par** les caractéristiques suivantes :
f) les zones transparentes des parois (19, 20) sont constituées d'un matériau transparent,
g) les trous à air (25) et ainsi le courant d'air ou de gaz pouvant être produit en service sont dirigés obliquement vers la paroi (19, 20) opposée, de sorte que les parois (19, 20) sont maintenues exemptes d'impuretés et de poussière.

2. Organe de contrôle selon la revendication 1, **caractérisé par le fait que** le boîtier (13) est en forme de U, les boîtiers partiels (14, 15) étant les ailes du boîtier (13), et que les courants d'air ou de gaz, par la disposition des trous à air (25), peuvent être envoyés dans un espace intermédiaire, à savoir un espace de contrôle (37), entre les boîtiers partiels (14, 15), de sorte qu'un courant d'air est dirigé vers les côtés libres de l'espace de contrôle (37).

3. Organe de contrôle selon l'une des revendications 1 et 2, **caractérisé par le fait que** les trous à air (25) sont situés dans la zone d'un angle entre les parois en regard (19, 20) d'une part et une paroi de liaison dirigée transversalement (27) d'autre part, de façon telle que les trous à air (25) soient dirigés obliquement vers la paroi (19, 20) opposée.

4. Organe de contrôle selon la revendication 1 ou une des autres revendications, **caractérisé par le fait que** l'air sous pression peut être amené à l'organe de contrôle (10) par une conduite d'air commune (21), un câble (28) allant également à l'organe de contrôle (10) formant un tout avec la conduite d'air (21), en particulier étant placé à l'intérieur de la conduite d'air (21) de façon telle que celle-ci forme un conduit d'air de section annulaire.

5. Organe de contrôle selon la revendication 4, **caractérisé par le fait que** le câble (28) est étanché par des joints d'étanchéité (29) à l'intérieur de la conduite d'air (21) à l'extrémité libre de celle-ci, et que la conduite d'air (21) présente à l'intérieur du boîtier (13, 15) des trous de sortie dirigés latéralement (24) pour l'air.

6. Organe de contrôle selon la revendication 1 ou une des autres revendications, **caractérisé par le fait qu'**à l'organe de contrôle (10) est associé un amplificateur (30) placé à distance de celui-ci, la conduite d'air (21) étant jointe à cet amplificateur (30) ou à un boîtier d'amplificateur (31) et reliée à une source d'air comprimé par une conduite d'air (34) se joignant au boîtier d'amplificateur (31).

7. Organe de contrôle selon la revendication 6, **caractérisé par le fait qu'**à l'intérieur du boîtier d'amplificateur (31) est formé un conduit d'air (35) qui va de la conduite d'air (34) à la conduite d'air (21).

8. Organe de contrôle selon l'une des revendications 6 et 7, **caractérisé par le fait que** la conduite d'air (21) et le câble (28) s'étendant à l'intérieur de celle-ci se joignent à l'amplificateur (30) par un raccord (36).

9. Organe de contrôle selon la revendication 1 ou une des autres revendications, **caractérisé par le fait qu'**un conduit de lumière (38), en particulier un câble en fibre de verre, est placé dans un tube extérieur (39) de façon telle qu'entre le conduit de lumière (38) et le tube extérieur (39) soit formé un conduit annulaire (40), et qu'un courant de gaz ou d'air peut être envoyé entre le conduit de lumière (38) et le tube extérieur (39) en direction d'une extrémité libre du conduit de lumière (38).

10. Organe de contrôlé selon la revendication 9, **caractérisé par le fait qu'**à l'extrémité du conduit de lumière (38) est placée une tête (41) ayant une ouverture, en particulier une optique angulaire dirigée de côté (42), et que la tête (41) est placée dans un boîtier (43) ayant une ouverture (45) pour l'entrée et la sortie d'un faisceau lumineux, le conduit de lumière (38) ou l'optique angulaire (42) étant supporté dans l'ouverture (45) de façon telle que soient formées des ouvertures menant à l'extérieur du boîtier (43) pour le courant d'air.
